# EUROPEAN PATENT SPECIFICATION

(11) **EP 2 304 932 B1**
(45) Date of publication and mention of the grant of the patent: **16.11.2011**
(21) Application number: 08782262.3
(22) Date of filing: 23.07.2008
(51) Int. Cl.: H04N 5/225, G06F 3/033

(54) **IMAGE CAPTURING DEVICE**
BILDERFASSUNGSEINRICHTUNG
DISPOSITIF DE CAPTURE D IMAGE

(30) Priority: 13.06.2008 US 138917
(43) Date of publication of application: 06.04.2011
(73) Proprietor: Sony Ericsson Mobile Communications AB, 221 88 Lund (SE)
(72) Inventor: HUNT, Alexander, S-218 72 Tygelsjö (SE); COPE, Jason, Durham NC 27713 (US)
(74) Representative: Meier, Florian
(86) International application number: PCT/US2008/070889
(87) International publication number: WO 2009/151465

(56) References cited:
- JP-A- 2 056 527
- US-A1- 2002 176 016
- US-A1- 2007 097 088

## Description

### TECHNICAL FIELD

The present invention relates generally to devices that capture Images, and particularly to controlling the functions of devices that capture images.

### BACKGROUND

Devices that capture digital images, such as digital cameras, are very common. They may be standalone devices, or they may be integrated with other consumer electronic devices such as cellular telephones and personal Digital Assistants (PDAs). In many cases, the devices are configured to automatically control at least some of their features and functions to provide a user with a quality image. One example would be a camera having automatic focus capability. With automatic focus, a camera can automatically obtain, and in some cases continuously maintain, the correct focus on a subject without requiring user input Another example would be a camera that automatically controls a flash device and/or an exposure level responsive to detecting the ambient light level.

Although these types of automatic control mechanisms are useful, many users would rather adjust the camera features and functions manually. Therefore, many cameras will typically include a variety of different buttons and other controls that allow the user to control the camera. For example, many cameras have a '+' and a'-' button disposed on the housing to allow a user to increase and decrease zoom. Similarly, mechanical switches allow the user to manually control focus and the camera's response to various levels of light. Some cameras may require a user to navigate a displayed menu to adjust the camera's features and functions. However, the ease with which a user may manually adjust the camera functions can be improved.

An image-capturing device according to the preamble of independent claim 1 is known from US 2007/097088 A1. This document discloses a digital camera having an annular touch-sensitive user input control. The annular touch-sensitive user input control is positioned on an opposite side of a housing next to a display to allow a user to conveniently access the control with a thumb.

US 2002/176016 A1 discloses a portable digital camera having touch-sensitive controls formed as elongated strips disposed on the camera. Furthermore, JP 02-056527 A shows an annular user input control on the housing of a camera device, whereby the annular control is positioned on the rear of the housing so that the user can operate the control and still view the display of the device.

### SUMMARY

The present invention provides an image-capturing device, such as a camera or a camera-equiped wireless communication device, for example, as defined in independent claim 1. Furthermore, the present invention provides a method of controlling an image-capturing function as defined in independent claim 9.

The dependent claims define preferred and advantageous embodiments of the invention.

### BRIEF DESCRIPTION OF THE DRAWINGS

Figures 1A-1B are perspective views that illustrate a camera configured to allow a user to manually control its functions according to one embodiment of the present invention.
Figure 2 is a block diagram Illustrating some of the components of a camera configured to function according to one embodiment of the present invention.
Figure 3 is a block diagram illustrating some of the components of a camera-equipped wireless communications device configured to function according to one embodiment of the present invention.
Figure 4 is a perspective view of a camera-equipped wireless communications device configured to function according to one embodiment of the present invention.

### DETAILED DESCRIPTION

The present invention provides a device capable of capturing images, such as a camera or a camera-equipped wireless communications device, which uses touch sensors to allow a user to manually control its zoom and focus functionality. Particularly, in one embodiment, a touch-sensitive zoom control is circularly shaped and disposed on the housing such that it substantially surrounds a camera lens. A user may move a finger around this sensor in both clockwise and counter-clock wise directions to manually control the zoom of the image-capturing device. Another touch-sensitive focus control may be formed as an elongated strip, and may be disposed on another area of the device housing. The user may slide a finger back and forth along this touch-sensitive user control to manually control focus. Of course, the touch-sensitive user controls may be swapped. That is, the touch-sensitive zoom control may be formed as the elongated strip along which the user slides a finger, and the touch-sensitive focus control may be circularly shaped and disposed on the housing such that it substantially surrounds the camera lens.

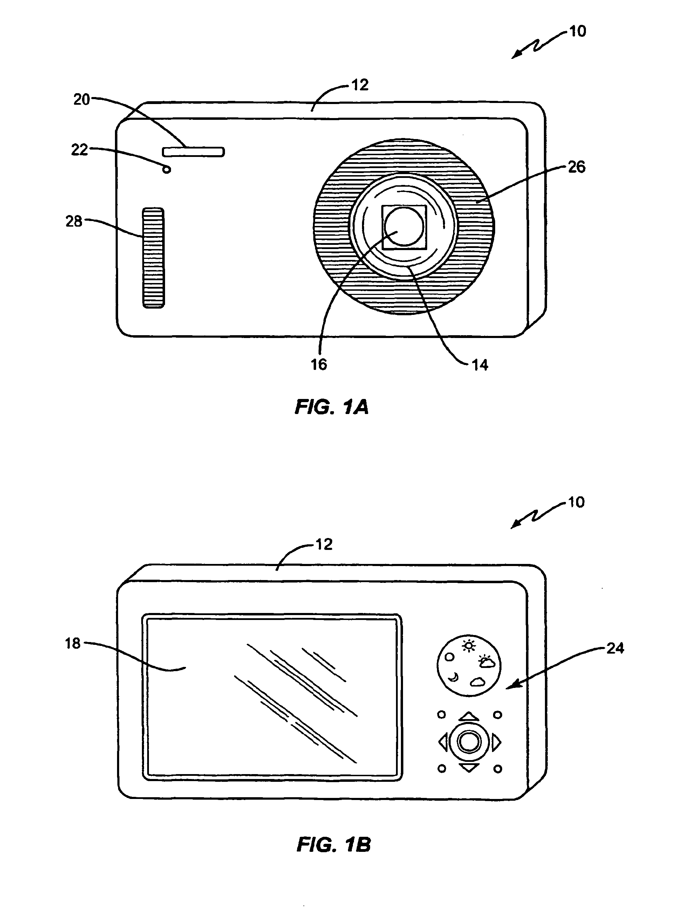

Turning now to the drawings. Figures 1A and 1B illustrate perspective views of a front face (Figure 1A) and an opposing back face (Figure 1B) of a camera 10 configured according to one embodiment of the present invention. As seen in the figures and as described by the specification, the camera 10 comprises a digital camera; however, this is for illustrative purposes only and the present invention is not limited to use solely in digital cameras. In fact, the present invention is not limited to use in cameras. Those skilled in the art should appreciate that the present invention may be employed by any type of device known in the art that is capable of capturing still images and/or video of a subject. Such devices include cameras, but also include cellular telephones, Personal Digital Assistants (PDAs), satellite telephones, suitably-equipped computing devices, and the like.

Camera 10 comprises a housing 12, a lens assembly 14, a display 18, a flash device 20, a light sensor 22, and a user interface 24. The lens assembly 14 comprises one or more lenses 16 that collect and focus light onto an image sensor (not shown). The image sensor may be, for example, any conventional image sensor, such as a charge-coupled device (CCD) or a complementary metal oxide semiconductor (CMOS) image sensor. The image sensor captures the images formed by the light as raw image data, and forwards that raw image data to an image processor (not shown). The image processor then processes the raw image data for subsequent storage in memory, or for output to a display 18.

In this embodiment, the lens assembly 14 has a telescoping structure that allows the lens assembly 14 to retract into, and extend out of, the camera housing 12. Generally, such movement of a lens assembly increases and decreases optical zoom. The one or more focusing lenses 16, which may be structured as an array of optical lenses, for example, may also be movable independently of the lens assembly 14 structure. Movement of the focusing lenses 16 may be used to alter focus. As described in more detail below, the present invention may be used by an operator to manually control the movement of one or both of the lens assembly 14 and the focusing lenses 16 to alter the zoom and/or the focus of the camera 10.

Display 18 may comprise, for example, a Liquid Crystal Display (LCD) that allows a user of camera 10 to preview captured images, video, and view menu options and other information. In many cases, the display 18 also functions as a viewfinder to permit the user to view the subject of an image before capturing the image. Flash device 20 and light sensor 22 are disposed on the front face of camera 10. As is known in the art, the light sensor 22 measures the amount of ambient light. Based on that measurement, the camera 10 may generate one or more control signals to activate flash device 22 to provide additional illumination.

The user interface (UI) 24 is disposed on the back face of camera 10 and includes a variety of manual controls. As seen in the embodiment of Figure 1B, the controls may include navigation controls to allow a user to manually navigate and select displayed menu options, and one or more selector switches and buttons that permit the user to manually specify ambient lighting conditions. Although not specifically shown, other types of controls that accept user input are also possible. For example, some cameras will also include a keypad to receive alphanumeric data from a user, a spring-loaded switch to turn the camera on and off, and a plurality of contact switches that allow a user to manually adjust the zoom and/or focus.

However, for conventional cameras, such manual controls can be problematic. Particularly, these controls typically extend through openings in the housing 12 and contact a signal path on a printed circuit board (PCB). Dirt and other debris may enter the camera housing 12 through these openings. Further, such mechanical controls may wear quickly. Additionally, these types of controls may impact internal circuit design because the components and signal paths that carry and process their resultant signals must be located near the controls. Given that user controls are typically positioned on the housing 12 to facilitate user access, there is little room for deviation in the internal circuit design.

The present invention, however, addresses such problems. Particularly, the UI 20 of camera 10 also includes one or more touch-sensitive user controls 26, 28 disposed on the housing 12 (Fig. 1A). The touch-sensitive user controls 26, 28 may comprise, for example, arrays of capacitive sensors that generate signals to control a feature of the camera 10 responsive to sensing the user's touch. Although the present invention is not limited to these types of sensors, one example of a suitable capacitive sensor that may be employed by the present invention is any capacitive sensor in the CAPSENSE family of sensors manufactured by CYPRESS SEMICONDUCTOR CORPORATION.

Capacitive sensors are well known in the art. However, for clarity, a brief description is included here. Generally, capacitive sensors, such as the CAPSENSE sensors, are formed as an array of switched capacitors. A voltage is applied through the sensor array. The sensor array detects changes in the applied voltage as the user moves a finger, for example, over the array and then sends the detected voltages to the comparator. The comparator compares the detected voltages to a reference value and, based on the comparison, outputs an appropriate signal that is processed to determine the sensors' status.

As seen in Figures 1A-1B, there are two independent touch-sensitive user controls 26, 28. A first touch-sensitive user control 26 is formed in a substantially circular shape, and disposed on housing 12 such that it substantially surrounds the lens assembly 14. Such a circular touch-sensitive sensor 26 may be manufactured, for example, by wrapping the switched capacitor array around 360 degrees. In operation, the user slides his or her finger around the touch-sensitive user control 26 in clockwise and counterclockwise directions. The array outputs different voltages as a signal depending on the detected direction of the user's finger.

A second touch-sensitive user control 28 is also disposed on the front face of housing 12. The second touch-sensitive user control 28 is formed as an elongated strip over which the user may move his or her finger, for example. As with the first user control 26, the second user control 28 detects which direction the user is moving his or her finger along user control 26, and outputs an appropriate voltage.

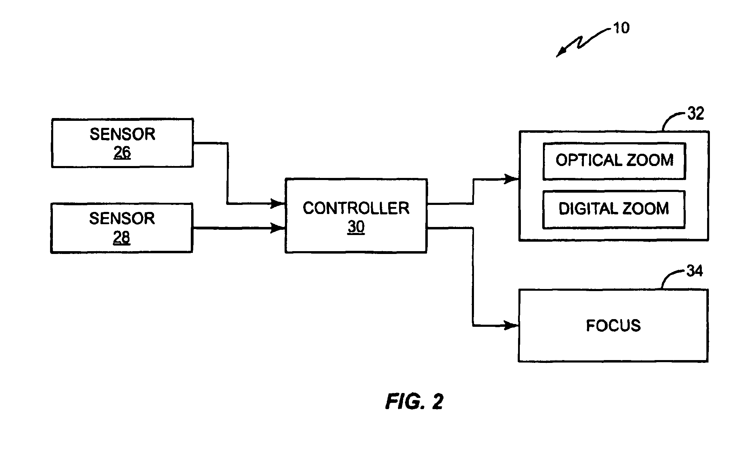

Figure 2 is a block diagram that illustrates some of the component parts of camera 10, and how those components interact to control the functions of camera 10 responsive to the detected user touch on one or both of the touch-sensitive user controls 26, 28.

As seen in Figure 2, the camera 10 comprises a controller 30 that interconnects the touch-sensitive user controls 26, 28 to zoom and focus mechanisms 32, 34 contained within the camera 10. The zoom and/or focus mechanisms 32, 34 may be, for example, hardware and/or software functions that are already included in camera 10. As one or both of the touch-sensitive user controls 26, 28 detect user movement along the user controls 26, 28, they output their respective comparator results to the controller 30. Controller 30 is configured to interpret these signals, and to generate control signals to control one or both of the zoom mechanism 32 and the focus mechanism 34 based on the received signals.

Figure 2 illustrates the zoom mechanism 32 as having two components - optical zoom and digital zoom. Regardless of the type of zoom, the zoom mechanism 32 is controlled according to the signals output by the first touch-sensitive user control 26. For optical zoom, when a user slides a finger in a clockwise direction around touch-sensitive user control 26, the controller 30 could generate a control signal with a first value to extend the telescoping lens assembly 14 out of the housing 12 to increase the zoom. If the user slides a finger around the sensor 26 in a counter-clockwise direction, however, the controller 30 could generate the control signal with a second value to retract the telescoping lens assembly 14 into the housing 12 to decrease the zoom.

Not all image-capturing devices, however, will employ such telescoping lens assemblies to effect optical zoom. In some cases, zoom may be effected by altering one or more lenses within the housing 12. In these cases, the lens assembly might not extend out of and retract into the housing 12, but instead, might include one or more lenses that slide axially within the housing 12. In these cases, the zoom mechanism 32 may be controlled according to the signals output by the first touch-sensitive user control 26. Therefore, when the user slides a finger clockwise around touch-sensitive user control 26, the controller 30 could generate a control signal with a first value to slide one or more lenses axially in a first direction within the housing 12 to increase the zoom. Conversely, sliding a finger around the control in a counter-clockwise direction might cause the controller 30 to generate the control signal with a second value to slide the one or more lenses axially in a second, opposing direction within the housing 12 to decrease the zoom.

For digital zoom, the controller 30 could generate appropriate control signals responsive to the touch-sensitive user control 26 to cause an image processor, for example, to process pixels accordingly. Specifically, the first control signal may be generated to cause the image processor to apply digital zoom techniques to enlarge an image to be captured, while the second control signal may be generated to control the image processor to apply digital zoom techniques to reduce the image to be captured.

It should be noted that in some embodiments, the controller 30 may be configured to effect both the optical zoom and the digital zoom of a camera 10 responsive to the output of the first touch-sensitive user control 26. In such embodiments, the controller 30 could first alter the optical zoom of camera 10 responsive to the detected movement of the user's finger around touch-sensitive user control 26. Once the optical zoom capability of camera 10 has been reached or exceeded, the controller 30 could then control the digital zoom capabilities. In a similar manner, the controller 30 could be configured to first decrease the digital zoom responsive to the detected movement of the user's finger around touch-sensitive user control 26. Once the digital zoom is no longer being used, the controller 30 could then decrease the optical zoom. Although possible, there is no requirement that the user specify which particular zoom function - optical or digital - should be changed.

The focus mechanism 34 is controlled according to the signals output by the elongated second touch-sensitive user control 28. When a user moves a finger in a first direction (e.g., 'up'), the controller 30 could generate a control signal to move one or more of the lenses 14 to alter focus. When the user moves the finger along the second touch-sensitive user control 28 in a second direction (e.g., 'down'), the controller could generate another control signal to move the lenses 16 in an opposite direction to alter focus.

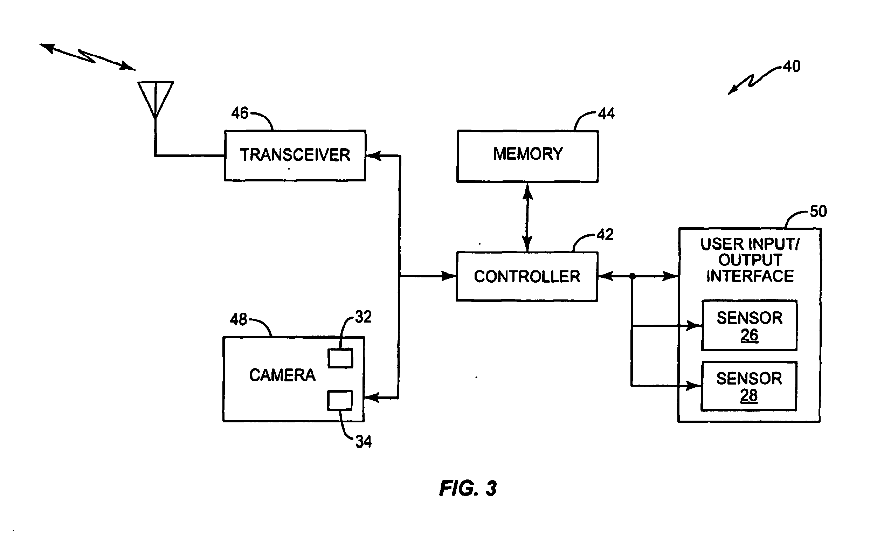

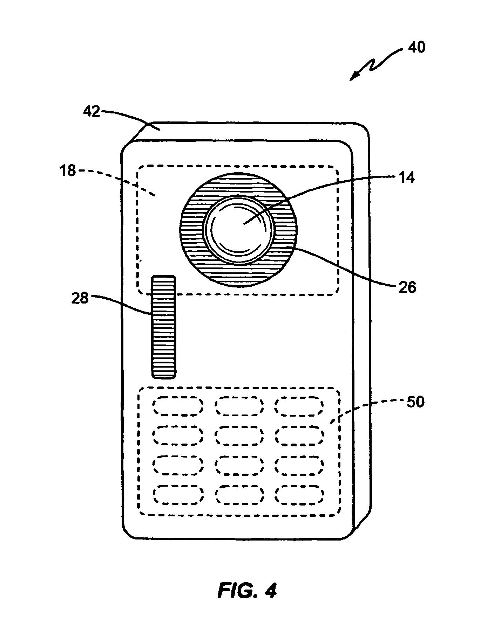

As previously stated, those skilled in the art should realize that the present invention may be employed on devices other than a camera 10. As seen in Figures 3 and 4, for example, the present invention may also be used on a camera-equipped wireless communications device, such as a camera-equipped cellular telephone 40.

Figure 3 shows some of the components of a camera-equipped cellular telephone 40 configured according to one embodiment of the present invention. As seen in Figure 3, the camera-equipped cellular telephone 40 comprises a controller 42 that interconnects a memory 44, a transceiver 46, a camera 48, and a user interface (UI) 50. The UI 50 includes the touch-sensitive user controls 26, 28 that are used to detect the user's touch, and to control both the zoom and focus mechanisms 32, 34 of camera 10 as previously described. However, in some embodiments, the camera 48 and the touch-sensitive user controls 26, 28 may be part of a camera interface module. Camera interface modules generally contain the circuitry and components that are required to capture images and/or video, and are usually mated with a cellular telephone during manufacture.

Figure 4 is a perspective view showing a rear face of the camera-equipped cellular telephone 40. In Figure 4, the first touch-sensitive user control 26 is disposed around the lens 14_{.} Because the lens 14 of a camera-equipped cellular telephone 40 is typically very small, the first touch-sensitive user control 26 may be enlarged to allow the user to easily locate and operate the touch-sensitive user control 26. The second touch-sensitive user control 28 is disposed near an edge of the rear face of device 40. The user may operate the first and second touch-sensitive user controls 26, 28 as previously described to adjust one or both of the zoom and focus functions provided by the camera-equipped cellular telephone 40.

The present invention may, of course, be carried out in ways other than those specifically set forth herein without departing from essential characteristics of the invention. For example, the first and second touch-sensitive user controls 26, 28 may be placed anywhere on the housing of camera 10 or the camera-equipped cellular telephone 40. Further, there is no requirement that the touch-sensitive user controls 26, 28 be capacitive sensors. Other types of touch-sensitive sensors and detectors may also be used.

Additionally, the first and second touch-sensitive user controls are described herein as being used to control the zoom and focus functions of the camera 10. However, the present invention is not so limited. In one embodiment, for example, a touch-sensitive user control may be used to generate input signals to control an exposure level. Particularly, the second touch-sensitive user control, or another touch-sensitive user control, could be configured to generate input signals having different values responsive to detecting the user's finger sliding along the control. The controller could then generate the appropriate control signals to control the exposure levels for the camera 10 responsive to the input signals. Other functions and features of camera 10 may also be controlled using touch-sensitive user controls.

Therefore, the present embodiments are to be considered in all respects as illustrative and not restrictive, and all changes coming within the meaning and equivalency range of the appended claims are intended to be embraced therein.

## Claims

1. An image-capturing device (10) comprising:
a housing (12);
a lens assembly (12);
a first touch-sensitive user control (26) positioned on the housing (12) and configured to generate input signals based on a detected direction of user movement; and
a controller (30) communicatively connected to the first touch-sensitive user control (26) and configured to control a first image-capturing function based on the input signals,
**characterized in that**
the first touch-sensitive user control (26) is formed in a substantially circular shape and positioned on the housing (12) such that it substantially surrounds the lens assembly (14), wherein the first touch-sensitive user control (26) is configured to generate the input signals based on the detected direction of user movement around the first touch-sensitive user control (26) in a clockwise direction and a counterclockwise direction.

2. The image-capturing device of claim 1 wherein the controller (30) is configured to increase zoom responsive to the first touch-sensitive user control (26) detecting the user moving in one of the clockwise and counterclockwise directions, and to decrease zoom responsive to the first touch-sensitive user control (26) detecting the user moving in the other of the clockwise and counterclockwise directions.

3. The image-capturing device of claim 1 wherein the first touch-sensitive user control (26) is configured to generate the input signals to cause the controller (30) to alter a focus of the lens assembly (14) responsive to detecting the user moving in the clockwise and counterclockwise directions.

4. The image-capturing device of claim 1 further comprising a second touch-sensitive user control (28) disposed on the housing (12) and configured to generate input signals based on a detected direction of user movement along the second touch-sensitive user control (28).

5. The image-capturing device of claim 4 wherein the controller (30) is further configured to control a second image-capturing function responsive to the input signals generated by the second-touch sensitive user control (28).

6. The image-capturing device of claim 4 wherein the controller (30) is further configured to:
generate control signals to control a zoom function of the image-capturing device (10) responsive to receiving input signals from the first touch-sensitive user control (25); and
generate control signals to control a focus of the image-capturing device (10) responsive to receiving input signals from the second touch-sensitive user control (28).

7. The method of claim 4 wherein the controller (30) is further configured to generate control signals to control an exposure level function of the image-capturing device (10) responsive to receiving input signals from one of the first and second touch-sensitive user controls (26, 28).

8. The image-capturing device of claim 1 wherein the first touch-sensitive user control (26) comprises a capacitive sensor device and is configured to detect the user moving around the control in the clockwise and counterclockwise directions.

9. A method of controlling an image-capturing function, the method comprising:
positioning a first touch-sensitive user control (26) on a housing (12) of an image-capturing device (10) to substantially surround a lens assembly (14), wherein the first touch-sensitive user control (26) is formed in a substantially circular shape;
receiving input signals indicating a detected direction of user movement around the first touch-sensitive user control (26); and
generating control signals to control a first image-capturing function based on the input signals.

10. The method of claim 9 wherein generating control signals comprises:
generating control signals to increase optical zoom responsive to the first touch-sensitive user control (26) detecting the user moving in a first direction; and
generating control signals to decrease optical zoom responsive to the first touch-sensitive user control (26) detecting the user moving in a second, opposite direction.

11. The method of claim 9 wherein generating control signals comprises:
generating control signals to increase digital zoom responsive to the first touch-sensitive user control (26) detecting the user moving in a first direction; and
generating control signals to decrease digital zoom responsive to the first touch-sensitive user control (26) detecting the user moving in a second, opposite direction.

12. The method of claim 9 wherein generating control signals comprises generating the control signals to alter a focus responsive to the first touch-sensitive user control (26) detecting the user moving in a first direction and a second, opposite direction.

13. The method of claim 9 further comprising:
receiving input signals indicating a detected direction of user movement along a second touch-sensitive user control (28) disposed on a housing of an image-capturing device (10); and
generating control signals to control a second image-capturing function based on the input signals.

14. The method of claim 13 wherein generating control signals comprises:
generating control signals to control zoom responsive to receiving input signals from the first touch-sensitive user control (26); and
generating control signals to control focus responsive to receiving input signals from the second touch-sensitive user control (28).

15. The method of claim 13 wherein generating control signals to control a second image-capturing function comprises generating control signals to control an exposure level based on the input signals indicating a direction of user movement along one of the first and second touch-sensitive user controls (26, 28).

## Patentansprüche

1. Bilderfassungseinrichtung (10) umfassend:
ein Gehäuse (12);
eine Linsenanordnung (14);
eine erste berührungsempfindliche Benutzersteuerung (26), welche an dem Gehäuse (12) positioniert und konfiguriert ist, um Eingangssignale basierend auf eine erfasste Benutzerbewegungsrichtung zu erzeugen; und
eine Steuerung (30), welche mit der ersten berührungsempfindlichen Benutzersteuerung (26) in Verbindung steht und verbunden ist und konfiguriert ist, eine erste Bilderfassungsfunktion basierend auf den Eingangssignalen zu steuern,
**dadurch gekennzeichnet, dass**
die erste berührungsempfindliche Benutzersteuerung (26) im Wesentlichen in einer runden Gestalt ausgebildet und an dem Gehäuse (12) positioniert ist, so dass sie im Wesentlichen die Linsenanordnung (14) umgibt, wobei die erste berührungsempfindliche Benutzersteuerung (26) konfiguriert ist, um die Eingangssignale basierend auf der erfassten Benutzerbewegungsrichtung, um die erste berührungsempfindliche Benutzersteuerung (26) in einer Uhrzeigersinnrichtung und einer Gegenuhrzeigersinnrichtung zu erzeugen.

2. Bilderfassungseinrichtung nach Anspruch 1, wobei die Steuerung (30) konfiguriert ist, um Zoom in Abhängigkeit von der ersten berührungsempfindlichen Benutzersteuerung (26), welche die Benutzerbewegung in eine der Uhrzeigersinn- und Gegenuhrzeigersinnrichtung detektiert, zu erhöhen, und den Zoom in Abhängigkeit von der ersten berührungsempfindlichen Benutzersteuerung (26), welche die Benutzerbewegung in die andere der Uhrzeigersinn- und Gegenuhrzeigersinnrichtungen detektiert, zu erniedrigen.

3. Bilderfassungseinrichtung nach Anspruch 1, wobei die erste berührungsempfindliche Benutzersteuerung (26) konfiguriert ist, die Eingangssignale zu erzeugen, um zu verursachen, dass die Steuerung (30) einen Fokus der Linsenanordnung (14), abhängig von der Erfassung der Benutzerbewegung in den Uhrzeigersinn- und Gegenuhrzeigersinnrichtungen modifiziert.

4. Bilderfassungseinrichtung nach Anspruch 1 weiter umfassend eine zweite berührungsempfindliche Benutzersteuerung (28), welche an dem Gehäuse (12) angeordnet und konfiguriert ist, um Eingangssignale basierend auf einer erfassten Benutzerbewegungsrichtung entlang der zweiten berührungsempfindlichen Benutzersteuerung (28) zu erzeugen.

5. Bilderfassungseinrichtung nach Anspruch 4, wobei die Steuerung (30) weiter konfiguriert ist, eine zweite Bilderfassungsfunktion in Abhängigkeit der Eingangssignale, welche von der zweiten berührungsempfindliche Benutzersteuerung (28) erzeugt worden sind, zu steuern.

6. Bilderfassungseinrichtung nach Anspruch 4, wobei die Steuerung (30) weiter konfiguriert ist, um
Steuersignale zu erzeugen, um Zoomfunktionen der Bilderfassungseinrichtung (10) in Abhängigkeit vom Erhalten von Eingangssignalen von der ersten berührungsempfindlichen Benutzersteuerung (25) zu steuern; und
Steuersignale zu erzeugen, um einen Fokus der Bilderfassungseinrichtung (10) in Abhängigkeit vom Erhalten von Eingangssignalen von der zweiten berührungsempfindlichen Benutzersteuerung (28) zu steuern.

7. Verfahren nach Anspruch 4, wobei die Steuerung (30) weiter konfiguriert ist Steuersignale zu erzeugen, um eine Belichtungspegelfunktion der Bilderfassungseinrichtung (10) in Abhängigkeit von dem Erhalten von Eingangssignalen von einer der ersten und zweiten berührungsempfindlichen Benutzersteuerungen (26, 28) zu steuern.

8. Bilderfassungseinrichtung nach Anspruch 1, wobei die erste berührungsempfindliche Benutzersteuerung (26) eine kapazitive Sensorvorrichtung umfasst und konfiguriert ist, um die Benutzerbewegung um die Steuerung herum in den Uhrzeigersinn- und Gegenuhrzeigersinnrichtungen zu detektieren.

9. Verfahren zur Steuerung einer Bilderfassungsfunktion, wobei das Verfahren umfasst:
Positionieren einer ersten berührungsempfindlichen Benutzersteuerung (26) an einem Gehäuse (12) einer Bilderfassungseinrichtung derart, dass sie eine Linsenanordnung im Wesentlichen umgibt, wobei die erste berührungsempfindlichen Benutzersteuerung (26) im Wesentlichen in einer runden Gestalt ausgebildet ist;
Empfangen von Eingangssignalen, welche eine detektierte Richtung einer Benutzerbewegung um die erste berührungsempfindliche Benutzersteuerung (26) herum bezeichnet; und
Erzeugen von Steuersignalen, um eine erste Bilderfassungsfunktion basierend auf Eingangssignalen zu steuern.

10. Verfahren nach Anspruch 9, wobei das Erzeugen von Steuersignalen umfasst:
Erzeugen von Steuersignalen, um optisches Zoom in Abhängigkeit von der ersten berührungsempfindlichen Benutzersteuerung (26), welche die Benutzerbewegung in einer ersten Richtung erfasst, zu erhöhen; und
Erzeugen von Steuersignalen, um optisches Zoom in Abhängigkeit von der ersten berührungsempfindlichen Benutzersteuerung (26), welche die Benutzerbewegung in einer zweiten, entgegen gesetzten Richtung erfasst, zu verringern.

11. Verfahren nach Anspruch 9, wobei Erzeugen von Steuersignalen umfasst:
Erzeugen von Steuersignalen, um digitalen Zoom in Abhängigkeit von der ersten berührungsempfindlichen Benutzersteuerung (26), welche die Benutzerbewegung in einer ersten Richtung erfasst, zu erhöhen; und
Erzeugen von Steuersignalen, um digitalen Zoom in Abhängigkeit von der ersten berührungsempfindlichen Benutzersteuerung (26), welche die Benutzerbewegung in einer zweiten, entgegen gesetzter Seite erfasst, zu verringern.

12. Verfahren nach Anspruch 9, wobei Erzeugen von Steuersignalen Erzeugen der Steuersignale umfasst, um einen Fokus, in Abhängigkeit von der erste berührungsempfindlichen Benutzersteuerung (26), welche die Benutzerbewegung in einer ersten Richtung und in einer zweiten, entgegen gesetzter Richtung erfasst, zu modifizieren.

13. Verfahren nach Anspruch 9, weiter umfassend:
Erhalten von Eingangssignalen, welche eine detektierte Richtung einer Benutzerbewegung entlang einer zweiten berührungsempfindlichen Benutzersteuerung (28), welche an einem Gehäuse einer Bilderfassungseinrichtung (10) angeordnet ist, anzeigen; und
Erzeugen von Steuersignalen, um eine zweite Bilderfassungsfunktion basierend, welche auf den Eingangssignalen zu steuern.

14. Verfahren nach Anspruch 13, wobei das Erzeugen von Steuersignalen umfasst:
Erzeugen von Steuersignalen, um Zoom in Abhängigkeit von erhaltenden Eingangssignalen von der ersten berührungsempfindlichen Benutzersteuerung (26) zu steuern; und
Erzeugen von Steuersignalen, um Fokus in Abhängigkeit von erhaltenden Eingangssignalen von der zweiten berührungsempfindlichen Benutzersteuerung (28) zu steuern.

15. Verfahren nach Anspruch 13, wobei das Erzeugen von Steuersignalen, um eine zweite Bilderfassungsfunktion zu steuern,
Erzeugen von Steuersignalen umfasst, um einen Belichtungspegel basierend auf den Eingangssignalen, welche eine Richtung der Benutzerbewegung entlang einer der ersten und zweiten berührungsempfindlichen Benutzersteuerungen (26, 28) anzeigen, zu steuern.

## Revendications

1. Dispositif (10) de prise de vue comprenant :
un boîtier (12) ;
un objectif (12) ;
une première commande tactile (26) d'utilisateur placée sur le boîtier (12) et constituée pour engendrer des signaux d'entrée en se basant sur le sens détecté d'un mouvement d'utilisateur ; et
un régisseur (30) connecté de façon communicante avec la première commande tactile (26) d'utilisateur et constitué pour, en se basant sur les signaux d'entrée, commander une première fonction de prise de vue,
**caractérisé en ce que** la première commande tactile (26) d'utilisateur a une forme pratiquement circulaire et est placée sur le boîtier (12) de façon à entourer pratiquement l'objectif (14), la première commande tactile (26) d'utilisateur étant constituée pour engendrer les signaux d'entrée en se basant sur le sens détecté d'un mouvement d'utilisateur autour de la première commande tactile (26) d'utilisateur dans le sens des aiguilles d'une montre et dans le sens contraire des aiguilles d'une montre.

2. Dispositif de prise de vue selon la revendication 1, dans lequel le régisseur (30) est constitué pour augmenter le zoom en réponse à la détection par la première commande tactile (26) d'utilisateur du mouvement d'utilisateur dans l'un du sens des aiguilles d'une montre et du sens contraire des aiguilles d'une montre, et pour diminuer le zoom en réponse à la détection par la première commande tactile (26) d'utilisateur du mouvement d'utilisateur dans l'autre du sens des aiguilles d'une montre et du sens contraire des aiguilles d'une montre.

3. Dispositif de prise de vue selon la revendication 1, dans lequel la première commande tactile (26) d'utilisateur est constituée pour engendrer les signaux d'entrée pour faire que le régisseur (30) modifie la mise au point de l'objectif (14) en réponse à la détection du mouvement d'utilisateur dans le sens des aiguilles d'une montre et dans le sens contraire des aiguilles d'une montre.

4. Dispositif de prise de vue selon la revendication 1, comprenant en outre une seconde commande tactile (28) d'utilisateur disposée sur le boîtier (12) et constituée pour engendrer des signaux d'entrée en se basant sur le sens détecté d'un mouvement d'utilisateur le long de la seconde commande tactile (28) d'utilisateur.

5. Dispositif de prise de vue selon la revendication 4, dans lequel le régisseur (30) est en outre constitué pour commander une seconde fonction de prise de vue en réponse aux signaux d'entrée engendrés par la seconde commande tactile (28) d'utilisateur.

6. Dispositif de prise de vue selon la revendication 4, dans lequel le régisseur (30) est en outre constitué pour :
engendrer des signaux de commande pour commander une fonction de zoom du dispositif (10) de prise de vue en réponse à la réception de signaux d'entrée provenant de la première commande tactile (25) d'utilisateur ; et
engendrer des signaux de commande pour commander la mise au point du dispositif (10) de prise de vue en réponse à la réception de signaux d'entrée provenant de la seconde commande tactile (28) d'utilisateur.

7. Procédé selon la revendication 4, dans lequel le régisseur (30) est en outre constitué pour engendrer des signaux de commande pour commander une fonction de niveau d'exposition du dispositif (10) de prise de vue en réponse à la réception de signaux d'entrée provenant de l'une des première et seconde commandes tactiles (26, 28) d'utilisateur.

8. Dispositif de prise de vue selon la revendication 1, dans lequel la première commande tactile (26) d'utilisateur comprend un dispositif de capteur capacitif et est constitué pour détecter le mouvement d'utilisateur autour de la commande dans le sens des aiguilles d'une montre et dans le sens contraire des aiguilles d'une montre.

9. Procédé de commande d'une fonction de prise de vue, le procédé comprenant :
la mise en place d'une première commande tactile (26) d'utilisateur sur un boîtier (12) d'un dispositif (10) de prise de vue de façon à entourer pratiquement un objectif (14), la première commande tactile (26) d'utilisateur ayant une forme pratiquement circulaire ;
la réception de signaux d'entrée représentant le sens détecté d'un mouvement d'utilisateur autour de la première commande tactile (26) d'utilisateur ; et
la génération de signaux de commande pour, en se basant sur les signaux d'entrée, commander une première fonction de prise de vue.

10. Procédé selon la revendication 9, dans lequel la génération de signaux de commande comprend :
la génération de signaux de commande pour augmenter un zoom optique en réponse à la détection par la première commande tactile (26) d'utilisateur du mouvement d'utilisateur dans un premier sens ; et
la génération de signaux de commande pour diminuer le zoom optique en réponse à la détection par la première commande tactile (26) d'utilisateur du mouvement d'utilisateur dans un second sens, opposé.

11. Procédé selon la revendication 9, dans lequel la génération de signaux de commande comprend :
la génération de signaux de commande pour augmenter un zoom numérique en réponse à la détection par la première commande tactile (26) d'utilisateur du mouvement d'utilisateur dans un premier sens ; et
la génération de signaux de commande pour diminuer le zoom numérique en réponse à la détection par la première commande tactile (26) d'utilisateur du mouvement d'utilisateur dans un second sens, opposé.

12. Procédé selon la revendication 9, dans lequel la génération de signaux de commande comprend la génération des signaux de commande pour modifier la mise au point en réponse à la détection par la première commande tactile (26) d'utilisateur du mouvement d'utilisateur dans un premier sens et dans un second sens, opposé.

13. Procédé selon la revendication 9, comprenant en outre :
la réception de signaux d'entrée représentant le sens détecté d'un mouvement d'utilisateur le long d'une seconde commande tactile (28) d'utilisateur disposée sur le boîtier d'un dispositif (10) de prise de vue ; et
la génération de signaux de commande pour, en se basant sur les signaux d'entrée, commander une seconde fonction de prise de vue.

14. Procédé selon la revendication 13, dans lequel la génération de signaux de commande comprend :
la génération de signaux de commande pour commander le zoom en réponse à la réception de signaux d'entrée provenant de la première commande tactile (26) d'utilisateur ; et
la génération de signaux de commande pour commander la mise au point en réponse à la réception de signaux d'entrée provenant de la seconde commande tactile (28) d'utilisateur.

15. Procédé selon la revendication 13, dans lequel la génération de signaux de commande pour commander une seconde fonction de prise de vue comprend la génération de signaux de commande pour commander un niveau d'exposition en se basant sur les signaux d'entrée indiquant le sens d'un mouvement d'utilisateur le long de l'une des première et seconde commandes tactiles (26, 28) d'utilisateur.
